# EUROPEAN PATENT SPECIFICATION

(11) **EP 2 843 022 B1**
(45) Date of publication and mention of the grant of the patent: **16.12.2020**
(21) Application number: 14175888.8
(22) Date of filing: 07.07.2004
(51) Int. Cl.: C09J 163/00, C08L 63/00, C08G 18/12, C08L 55/00, C08L 75/04, C08G 18/66, C08G 18/67

(54) **Adhesive epoxy composition and process for applying it**
Klebende Epoxidzusammensetzung und Verfahren zum Auftragen
Composition époxy adhésive et son procédé d'application

(30) Priority: 07.07.2003 US 485254 P
(43) Date of publication of application: 04.03.2015
(62) Divisional of application: 04777644.8
(73) Proprietor: Dow Global Technologies LLC, Midland, MI 48674 (US)
(72) Inventor: Lutz, Andreas, Midland Michigan 48674 (US); Rohrer, Paul, CH-8704 Herrliberg (CH); Schönbächler, Hans, Midland Michigan 48674 (US)
(74) Representative: Beck Greener LLP

(56) References cited:
- DE-A1- 19 858 921
- US-A- 5 278 257

## Description

This invention relates to a method of applying an epoxy-based adhesive containing a toughening agent using a streaming process.

Epoxy resin based adhesives are used to bond a variety of different substrates together. In the automotive industry, epoxy resin adhesives are used to bond certain parts together, and are known as structural adhesives. A structural adhesive is an adhesive which bonds parts of the body structure of an automobile together. The problem with epoxy resins as used in adhesive compositions is that the epoxy resins are somewhat brittle and subject to fracturing when impacted. This tendency to fracture can be reduced by the addition of toughening agents. The problem with the use of toughening agents is that such toughening agents tend to increase the viscosity of the composition and the increased viscosity limits the method and speed of application. Mülhaupt, U.S. Patent 5,278,257 discloses an epoxy resin containing (a) copolymer based on at least one 1,3-diene and at least one polar, ethylenically unsaturated comonomer and (b) a phenol-terminated polyurethane, polyurea or polyurea urethane. The adhesives disclosed in Mülhaupt are excellent structural adhesives. Because these adhesives are very viscous, they are not useful in some high-volume applications which require high application speeds.

In particular these materials are applied generally as an extruded bead directly on the surface and have a viscosity of from 150 to 600 Pa.s. measured at 45°C. In another application these adhesives are applied using swirl techniques at a viscosity of 100 Pa.s. The process of applying an adhesive using an extruded bead is too slow for many high speed applications. The swirl process is a faster application but is not ideal for high-volume structural applications.

What is needed is a process for applying structural adhesives based on epoxy resins wherein the adhesive can be applied fast and in high-volume.

The invention is a method of applying an adhesive composition comprising applying to a substrate a stream of an adhesive as claimed in claims 1-5.

The isocyanate terminated prepolymer is the reaction product of an aliphatic polyisocyanate and a hydroxyl or amine terminated polyether wherein the polyether may contain urea or urethane linkages in the backbone. The capping compound comprises one or more aromatic or bisaromatic rings with one or more hydroxyl, amino, methyl amine or methylol groups attached to one or more of the aromatic rings. Where the capping compound contains more than one aromatic ring, the aromatic rings are bonded together through a carbon to carbon bond between two carbons on the aromatic rings, an alkylene, oxygen, carbonyl, carbonyloxy, or amido group and the aromatic rings may further be substituted with one or more alkyl, amino, alkylamino and/or hydroxyl groups provided such group does not interfere with the reaction of hydroxyl and/or amino groups with isocyanate groups. The reaction product has a crosslinking density such that the viscosity of the reaction product is as described herein at 45°C.

Further the invention is a method of applying the adhesive composition by applying it to a substrate in the form of a stream of the adhesive. This can performed using a high speed streaming apparatus.

The streamable adhesive can be applied at a speed of 200 to 400 millimeters (mm) per second. The adhesive used in the invention can be formulated to have relatively low viscosity yet provide a high strength bond.

The toughening agents comprise the reaction product of one or more isocyanate terminated prepolymers with one or more capping agents, wherein the isocyanate used to prepare the prepolymer has aliphatic and/or cycloaliphatic groups. Preferably, the prepolymer has a molecular weight so as to result in a low viscosity adhesive composition. Preferably, the viscosity of the prepolymer is from 20 Pa.s. or greater, more preferably 100 Pa.s. or greater. Preferably, the prepolymer has a viscosity of 1000 Pa.s. or less and more preferably 800 Pa.s. or less. In order to achieve the desired viscosity of the toughening agent, the number of branches of the isocyanate prepolymer and the crosslink density of the ultimate reaction product must be kept low. The number of branches of the prepolymer is directly related to the functionality of the raw materials used to prepare the isocyanate terminated prepolymer. Functionality refers to the number of reactive groups in the reactants. Preferably the number of branches in the prepolymer is 6 or less and more preferably 4 or less. Preferably the number of branches is 1 or greater and more preferably 2 or greater. Crosslink density is the number of attachments between chains of polymers. At higher crosslink densities the viscosity of the reaction product is higher. The crosslink density is impacted by the functionality of the prepolymer and by the process conditions. If the temperature of the reaction to prepare the toughening agent is kept relatively low, crosslinking can be minimized. Preferably the crosslink density is 2 or less and more preferably 1 or less. Preferably, the molecular weight of the prepolymer is 8,000 (Mw) or greater, and more preferably 15,000 (Mw) or greater. Preferably, the molecular weight of the prepolymer is 40,000 (Mw) or less, and more preferably 30,000 (Mw) or less. Molecular weights as used herein are weight average molecular weights determined according to GPC analysis. The amount of capping agent reacted with the prepolymer should be sufficient to cap substantially all of the terminal isocyanate groups. What is meant by capping the terminal isocyanate groups with a capping agent is that the capping agent reacts with the isocyanate to place the capping agent on the end of the polymer. What is meant by substantially all is that a minor amount of free isocyanate groups are left in the prepolymer. A minor amount means an amount of the referenced feature or ingredient is present which does not impact in any significant way the properties of the composition. Preferably, the ratio of capping agent equivalents to isocyanate prepolymer equivalents is 1:1 or greater, more preferably 1.5:1 or greater, Preferably, the equivalents ratio of capping agent to isocyanate of prepolymer is 2.5:1 or less and more preferably 2:1 or less.

Preferably, the reaction product corresponds to one of the formulas I or II: 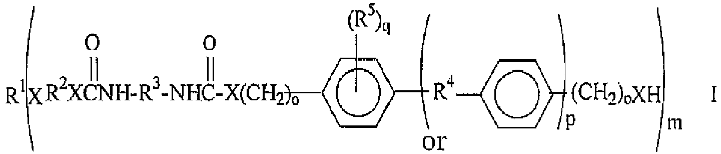 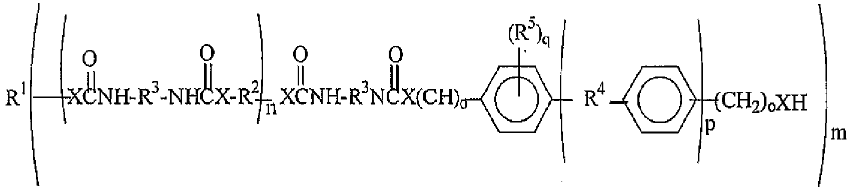
R¹ is independently in each occurrence a C₂₋₂₀ m-valent alkyl moiety;
R² is independently in each occurrence a polyether chain;
R³ is independently in each occurrence an alkylene, cycloalkylene or mixed alkylene and cycloalkylene moiety, optionally containing one or more oxygen or sulfur atoms;
R⁴ is a direct bond or an alkylene, carbonyl, oxygen, carboxyloxy, or amido moiety;
R⁵ is independently in each occurrence an alkyl, alkenyl, alkoxy, aryloxy or aryloxy moiety with the proviso that if p=1, then q=0;
X is O or -NR⁶ with the proviso that X is O where p is 1; and that where p is 0, X is O in at least one occurrence;
R⁶ is independently in each occurrence hydrogen or alkyl;
m is independently in each occurrence a number of 1 to 6;
n is independently in each occurrence a number of 1 or greater;
o is independently in each occurrence 0 or 1 if p is 0 and 0 if p is 1;
p is independently in each occurrence 0, or 1; and
q is independently in each occurrence a number of from 0 to 1.

The isocyanate terminated prepolymer corresponds to one of formulas III and IV 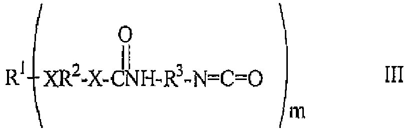 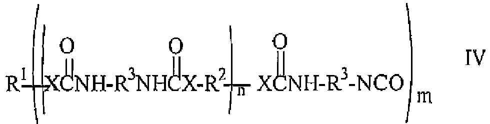 and capping compound corresponds to formula V 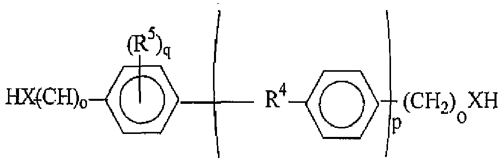 wherein R¹, R², R³,R⁴, R⁵, m, n, o, p and q are as defined hereinbefore.

R⁴ is preferably a direct bond or an alkylene, oxygen, carbonyl, carbonyloxy, or amido moiety. More preferably, R⁴ is a direct bond or a C₁₋₃ straight or branched alkylene moiety.

Preferably R⁵ is independently in each occurrence an alkyl, alkenyl, alkyloxy or aryloxy moiety with the proviso that if p=1 then q=0. More preferably R⁵ is a C₁₋₁₀ alkyl, C₁₋₂₀ alkenyl, C₁₋₂₀ alkoxy or C₆₋₂₀ aryloxy moiety. More preferably, R⁵ is a C₃₋₁₅ alkyl or C₂₋₁₅ alkenyl moiety.

Preferably, o is 0.

The polyether polyol or polyamine used to prepare the isocyantate terminated prepolymer of formula (III) can be any conventional polyether polyamine or polyol known to those skilled in the art. In order to prepare the prepolymer, the polyether polyol or polyether polyamine is reacted with an equivalents excess of a polyisocyanate in the presence of a polyaddition catalyst under conditions such that the hydroxyl or amino groups react with the polyisocyanate to form an isocyanate functional adduct of formula (III). If the starting compound is a polyether having two or more amino groups the prepolymer contains urea groups. If it is a polyether polyol the resulting prepolymer contains urethane groups. In order to produce the prepolymer of formula (IV) the starting compound is a C₂₋₂₀ mono or poly alcohol or amine. In this case the starting compound is reacted with a polyether polyol or a polyether polyamine and an equivalents excess of a polyisocyanate in the presence of a polyaddition catalyst under conditions such that an isocyanate functional prepolymer is prepared. Conventional polyaddition conditions are used for this reaction step. In prepolymer preparation, an excess of the polyisocyanate is reacted with the polyether polyol or polyamine so as to provide or result in the preparation of an isocyanate functional prepolymer. Preferably, the equivalent ratio of polyisocyanate with respect to the total of hydroxy and/or amino groups is 1.5:1 or greater and more preferably 2:1 or greater. Preferably, the equivalent ratio is 3.5:1 or less and more preferably 3:1 or less.

The polyether polyols or polyamines useful in the invention is any polyether or polyamine which can form a prepolymer with the polyisocyanate and when capped with the phenol provides a prepolymer having the desired viscosity characteristics described hereinbefore. The polyether polyols or polyamines comprise a series of hydrocarbon groups separated by oxygen atoms and terminated with hydroxyl, or primary or secondary amines (preferably primary amines). Preferably, the polyether is a polyalkylene ether, which is a series of alkylene groups alternating with oxygen atoms. Preferably, the polyalkylene polyether has a molecular weight of 400 (Mw(weight average)) or greater, and more preferably 1000 (Mw) or greater. Preferably, the polyalkylene polyether has a molecular weight (Mw) of 8000 or less, and more preferably 3000 (Mw) or less. Polyalkylene as used in this context refers to a polyether having repeating units containing straight or branched chain alkylene groups. Preferably, the alkylene group is from 2 to 6 carbons, and can be straight or branched chain, more preferably from 2 to 4 carbon atoms and most preferably 3 to 4 carbon atoms. Preferably, the alkylene groups are derived from ethylene oxide, propylene oxide, butylene oxide or tetrahydrofuran. Preferably, the polyether polyols or polyamines which are used to prepare the prepolymer have a functionality of 2 to 6, more preferably 2 to 4, even more preferably from 2 to 3 and most preferably 2. The polyether polyols or polyamines may also contain the residue of an initiator compound used to initiate polymerization of the alkylene oxide or tetrahydrofuran to make the polyalkylene polyether via techniques known to those skilled in the art. In a preferred embodiment the polyether is derived from tetrahydrofuran.

In the formulas used herein R² represents the residue of a polyether segment of the polymers represented. As used herein residue means that the polyether remaining is that portion except for the end groups X which are separately identified in the formulas (I) to (IV).

The polyether residue preferably has a molecular weight (weight average) of 400 or greater, more preferably 1000 or greater and most preferably 1500 or greater. The polyether residue preferably has a molecular weight of 8000 or less, more preferably 6000 or less and most preferably 3000 or less.

Starting compounds which are useful to produce prepolymers of the formula II in this invention are compounds having 1 to 8, preferably 2 to 8, more preferably 2 to 4, most preferably 2 to 3 active hydrogens. Preferable starting compounds include, for example, alcohols, glycols,low molecular weight polyols, glycerin, trimethylol propane, pentaerythritol, glucosides, sugars, ethylene diamine, diethylene triamine, and the like. Particularly, suitable glycols include ethylene glycol, 1,2-propylene glycol, 1,3-propylene glycol, 1,2-butylene glycol, 1,3-butylene glycol, 1,4-butylene glycol, 1,2-pentylene glycol, 1,3-pentylene glycol, 1,4-pentylene glycol, 1,5-pentylene glycol, neopentyl glycol and various hexane diols, mixtures thereof and the like. Preferred starting compounds are trifunctional such as trimethylol propane.

In the formulas used herein, R¹ is the residue of a starting compound or a polyaddition initiator for the polyether, respectively, well known to those skilled in the art. The starting compounds and initiators useful herein preferably correspond to the formula

R¹(XH)ₘ

wherein R¹, X and m are previously defined. Preferably the initiator is hydroxyl functional. Preferably R¹ is independently in each occurrence a C₂₋₂₀ m-valent alkyl group. More preferably R¹ is independently in each occurrence a C₂₋₈ m-valent alkyl group and even more preferably a C₂₋₆ alkyl group. R¹ is independently in each occurrence a 2 to 6 valent, more preferably 2 to 4 valent and most preferably 2 to 3 valent. Preferably X is 0. Preferably, m is a number of 2 to 6, even more preferably a number of 2 to 4 and most preferably 2 to 3.

The isocyanates useful in preparing the prepolymer and toughening agent of the invention include all aliphatic polyisocyanates. Aliphatic is used herein means that the isocyanate has in its backbone moieties which are not aromatic, and preferably moieties of alkylene, cycloalkylene or a mixture thereof. Further, the aliphatic, such as alkylene and/or cycloalkylene, moieties may contain one or more oxygen or sulfur atoms. Poly is used herein means two or more. Polyisocyanates mean isocyanate which have on average two or more isocyanate groups. Preferably, the isocyanates are isocyanates having from 2 to 3 isocyanate groups on average and more preferably, on average, 2 isocyanate moieties. Preferred polyisocyanates correspond to the formula 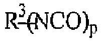 wherein R³ is as defined hereinbefore. Preferably, R³ is independently in each occurrence a C₁₋₂₀ alkylene, cycloalkylene or mixed alkylene and cycloalkylene moiety, optionally containing one or more oxygen or sulfur atoms in the alkylene and/or cycloalkylene chains. Mixed alkylene and cycloalkylene means a moiety that contains both straight and/or branched chains and cyclic alkylene rings. More preferably, R³ is ethylene, trimethylene, tetramethylene, pentamethylene, hexamethylene, heptamethylene, octamethylene, decamethylene, dodecamethylene, tetradecamethylene, hexadecamethylene, octadecamethylene, eicosamethylene; moieties corresponding to the formulas:

-(CH₂-CH₂-O)ₛ-CH₂-CH₂-,

-(CH(CH₃-CH₂-O)ₛ-CH(CH₃)-CH₂-,

--(CH₂₋CH₂-CH₂-O)ₛ-CH₂-CH₂-CH₂-CH₂ and

-CH₂-CH₂-S)ₛ-CH₂-CH₂-

in which s is independently in each occurrence 1 to 20; or cyclopenthalene, cyclohexalene, cyclohepthalene or two or more of such cycloalkylene groups bonded through a direct bond or bonded through an alkylene group.

Among preferred isocyanates are ethylene diisocyanate, trimethylene diisocyanate, tetramethylene diisocyanate, pentamethylene diisocyanate, hexamethylene diisocyanate, heptamethylene diisocyanate, octamethylene diisocyanate, decamethylene diisocyanate, dodecamethylene diisocyanate, tetradecamethylene diisocyanate, hexadecamethylene diisocyanate, octadecamethylene diisocyanate, eicosamethylene diisocyanate, cyclohexamethylene diisocyanate, cyclopenthalene diisocyanate, or cyclohepthalene diisocyanate, or bis-cyclohexalene, cyclohexylmethylene diisocyanate, and the like. A most preferred isocyanate is hexamethylene diisocyanate.

The capping agent useful in this invention is any phenol, benzyl alcohol, aromatic amine, or benzyl amine as described herein which is liquid or can be dissolved in the polyether used and which under defined reaction conditions herein reacts with the isocyanate groups of the prepolymer to cap the isocyanate groups.

Preferably, the capping agent is a phenol or a benzyl alcohol. In one preferred embodiment the phenol is an alkyl substituted phenol and preferably the alkyl group is a C₁₋₂₀ alkyl moiety, more preferably C₂₋₁₅, alkyl moiety and most preferably a C₈₋₁₂ alkyl moiety. Preferably, the phenols correspond to the following formula 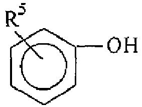 wherein R⁵ is more preferably a C₁₋₂₀ alkyl moiety, even more preferably a C₂₋₁₅ alkyl and most preferably a C₈₋₁₂ alkyl moiety. The size and location of the alkyl group on the phenol must not hinder or prevent the reaction of the hydroxyl group on the phenol with the isocyanate moieties on the prepolymer. In another embodiment the phenol is a bisphenol. The bisphenol is structured such that the two aromatic rings are bonded to each other by a direct bond or through an alkylene, carboxyl, sulfinyl, sulfonyl or an alkyl substituted silane moiety, Preferably, the aromatic rings are bonded by a direct bond or an alkylene moiety. Preferably, the alkylene moiety is C₁₋₂₀ straight or branched chain, more preferably C₁₋₃ straight or branched chain alkylene. Preferably, the bisphenolic compound corresponds to the formula 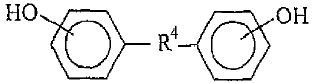 wherein R⁴ is defined hereinbefore. Among preferred phenolic compounds are bisphenol A, bisphenol F, 3-(n-penta-8'-decenyl)phenol and o-alkylphenol.

The toughening agent is prepared according to the following process. The first step is to determine whether the capping agent to be used is a solid or a liquid. If the capping agent to be used is a solid, it is dissolved in the polyether to be used. This process to dissolve the capping agent can be performed at elevated temperatures, that is, temperatures necessary to dissolve the capping compound in the polyether. Preferably, such temperatures are 100°C or greater, and most preferably 130°C or greater, and preferably 150°C or less, and most preferably 140°C or less. If the capping agent is liquid, it is added later in the process.

The polyether -based prepolymer with solid capping agent compound dissolved therein is thereafter contacted with the polyisocyanate in the presence of a catalyst suitable for catalyzing the reaction between hydroxyl groups and isocyanate groups (a condensation catalyst). This contacting generally results in an exotherm. The capping agent and polyisocyanate are allowed to react until a prepolymer is formed which has isocyanate reactive moieties and substantially no hydroxyls present from the polyalkylene polyether. Generally, an equivalent excess of isocyanate is used to achieve this. Preferably, an excess of isocyanate equivalents of 0.5 or greater is preferred, more preferably 1 or greater is more preferred, and 2.5 or less is preferred and more preferred is 2 or less. Generally, this reaction will take 30 minutes or more, more preferably 60 minutes or more, preferably 120 minutes or less, and more preferably 100 minutes or less.

This reaction is performed in the presence of a condensation catalyst. Examples of such catalysts include the stannous salts of carboxylic acids, such as stannous octoate, stannous oleate, stannous acetate, and stannous laureate; dialkyltin dicarboxylates, such as dibutyltin dilaureate and dibutyltin diacetate; tertiary amines and tin mercaptides. Preferable condensation catalysts for this reaction are dibutyltin-dilaurate, tin-II-octoate and diazabicyclooctane. The amount of catalyst employed is generally between 0.005 and 5 percent by weight of the mixture catalyzed, depending on the nature of the isocyanate. More preferably, the catalyst is used in an amount of 0.002 percent by weight of the reaction mixture or more, most preferably 0.01 percent by weight of the reaction mixture or more. More preferably, the catalyst is used in an amount of 0.2 percent by weight of the reaction mixture or less, and most 0.05 percent by weight of the reaction or less.

If the capping compound is dissolved in the polyether, -based prepolymer t is important to cool this reaction to keep the temperature below that temperature at which the prepolymer undergoes significant crosslinking. Preferably, the reaction mixture is cooled to a temperature of 90°C or less, and more preferably 80°C or less. If the capping agent to be used is a liquid after the completion of the reaction of the polyether with the polyisocyanate has occurred, the reaction mixture is cooled to a temperature below that temperature at which significant crosslinking could occur, and the capping agent is added to the reaction mixture. Preferably, the reaction mixture is cooled to a temperature of 90°C or less, and more preferably 80°C or less. The capping agent and isocyanate functional prepolymer are reacted for a sufficient time to cap the isocyanate moieties with the capping agent. Preferably, this reaction continues for a period of 20 minutes or greater, more preferably 50 minutes or greater, preferably the reaction is continued for a period 120 minutes or less, and more preferably 80 minutes or less. The catalyst from the previous step is present so as to catalyze the reaction of this step. The resulting reaction mixture is thereafter useful to prepare an epoxy adhesive formulation.

One component of the adhesive composition is an epoxide resin, such as those disclosed in U.S. Patent 4,734,332, in particular column 2, line 66 to column 4, line 24. Epoxide resins which may be employed in the compositions of the invention are those which contain groups illustrated in the following formula 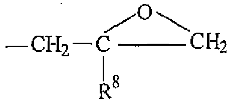 wherein R⁸ is hydrogen or C₁₋₄ alkyl, preferably hydrogen or methyl and most preferably hydrogen. Preferably, the epoxy resin is a rigid epoxy resin or a mixture of rigid epoxy resins and flexible epoxy resins wherein no more than 10 percent by weight of the epoxy resins include a flexible epoxy resin. As used herein, rigid epoxy resins refer to epoxy resins having bisphenol moieties in the backbone of the epoxy resin. Representative of preferred bisphenol resins useful in this invention are those disclosed in U.S. Patent 5,308,895 at column 8, line 6, incorporated herein by reference and represented by Formula 6. Preferably the rigid epoxy resin is a liquid epoxy resin or a mixture of a solid epoxy resin dispersed in a liquid epoxy resin. The most preferred rigid epoxy resins are bisphenol-A based epoxy resins and bisphenol-F based epoxy resins.

Flexible epoxy resins as used herein refer to epoxy resins having elastomeric chains in the backbone. Representative of such elastomeric chains are polyether chains which are preferably prepared from one or more alkylene oxides. Representative examples of these flexible epoxy resins are those described in U.S. Patent 5,308,895 at column 8, line 9 and formula 9 and the description thereof following, incorporated herein by reference. Preferably the flexible epoxy resin contains in its backbone ethylene oxide, propylene oxide or a mixture thereof.

Another component is a rubber-modified epoxy resin. Preferably, the adhesive of the invention includes an epoxy-terminated adduct of an epoxy resin and a diene rubber or a conjugated diene/nitrile rubber. This adduct is suitably prepared in the reaction of a polyepoxide, a compound having an average of more than one epoxy group as described hereinbefore, with a carboxy-functional conjugated diene rubber or a conjugated diene/nitrile rubber. The diene rubber is a polymer of a conjugated diene monomer such as butadiene and isoprene. Butadiene rubbers are preferred. Conjugated diene/nitrile rubbers are copolymers of a conjugated diene and an ethylenically unsaturated nitrile monomer, of which acrylonitrile is the most preferred one. When a conjugated diene/nitrile rubber is used, at least one such rubber present in the composition contains less than 30 weight percent polymerized unsaturated nitrile, and preferably no more than 26 weight percent polymerized unsaturated nitrile. The rubber also contains terminal groups that will react with an epoxide to form a covalent bond thereto. Preferably, the rubber contains from 1.5, more preferably from 1.8, to 2.5, more preferably to 2.2, of such terminal groups per molecule, on average. Carboxyl-terminated rubbers are preferred. The rubber is preferably a liquid at room temperature, and preferably has a glass transition temperature of less than - 25°C, preferably from-30 to -90°C. The molecular weight (Mₙ) of the rubber is suitably from 2000 to 6000, more preferably from 3000 to 5000. Suitable carboxyl-functional butadiene and butadiene/acrylonitrile rubbers are commercially available from Noveon under the tradenames Hycar® 2000X162 carboxyl-terminated butadiene homopolymer and Hycar® 1300X31 carboxyl-terminated butadiene/acrylonitrile copolymer. A suitable amine-terminated butadiene/acrylonitrile copolymer is sold under the tradename Hycar® 1300X21. Examples of nitrile rubbers are Hycar® 1300X8, Hycar® 1300X13, Hycar® 1300X9, Hycar® 1300X18 and Hycar® 1300X31 carboxyl-terminated butadiene acrylonitrile copolymers, all commercially available from Noveon.

The conjugated diene or conjugated diene/nitrile rubber is formed into an epoxy-terminated adduct by reaction with an excess of a polyepoxide. A wide variety of polyepoxide compounds such as cycloaliphatic epoxides, epoxidized novolac resins, epoxidized bisphenol A or bisphenol F resins, butanediol polyglycidyl ether, neopentyl glycol polyglycidyl ether or flexible epoxy resins can be used, but generally preferred on the basis of cost and availability are liquid or solid glycidyl ethers of a bisphenol such as bisphenol A or bisphenol F. Halogenated, particularly brominated, resins can be used to impart flame retardant properties if desired. For forming the adduct, liquid epoxy resins (such as Bisphenol A-based epoxy resin, DER 331, available from The Dow Chemical Company) are especially preferred for ease of handling in making the adduct. Typically, the rubber and an excess of the polyepoxide are mixed together with a polymerization catalyst such as a substituted urea or phosphine catalyst, and heated to a temperature of 100 to 250°C in order to form the adduct. Preferred catalysts include phenyl dimethyl urea and triphenyl phosphine. Preferably, enough of the polyepoxide compound is used that the resulting product is a mixture of the adduct and free polyepoxide compound.

The epoxy adhesive composition further contains a heat-activated curing agent. Preferably, that heat-activated curing agent is a nitrogen-containing heat-activated curing agent sometimes referred to as a latent curing agent. The curing agent (b) used in the new compositions may be any substance that remains inert towards epoxide resins below a certain "threshold" temperature, which is usually at least 80°C, and preferably at least 100°C or above, but reacts rapidly to effect curing once that threshold temperature has been exceeded. Such materials are well known and commercially available and include boron trichloride/amine and boron trifluoride/amine complexes, dicyandiamide, melamine, diallylmelamine, guanamines such as acetoguanamine and benzoguanamine, aminotriazoles such as 3-amino-1,2,4-triazole, hydrazides such as adipic dihydrazide, stearic dihydrazide, isophthalic dihydrazide, semicarbazide, cyanoacetamide, and aromatic polyamines such as diaminodiphenylsulphones. The use of dicyandiamide, isophthalic acid dihydrazide, adipic acid dihydrazide and 4,4'-diaminodiphenylsulphone is particularly preferred.

The adhesive composition useful in the invention can further contain other additives that are common in the adhesive art. Other customary additives which the mixtures according to the invention can contain are plasticizers, extenders, fillers and reinforcing agents, for example, coal tar, bitumen, textile fibers, glass fibers, asbestos fibers, boron fibers, carbon fibers, mineral silicates, mica, powdered quartz, hydrated aluminum oxide, bentonite, wollastonite, kaolin, silica aerogel or metal powders, for example, aluminum powder or iron powder, and also pigments and dyes, such as carbon black, oxide colors and titanium dioxide, fire-retarding agents, thixotropic agents, flow control agents, such as silicones, waxes and stearates, which can, in part, also be used as mold release agents, adhesion promoters, antioxidants and light stabilizers.

The epoxy resin or epoxide resin used in the invention is used in sufficient amount to give the desired adhesive and strength properties. Preferably, the epoxy resin is used in an amount of 30 parts per hundred parts of adhesive composition or greater, more preferably 40 parts per hundred parts of the adhesive composition or greater, and most preferably 50 parts per hundred parts of adhesive composition or greater. The epoxy resin is preferably used in the amount of 80 parts per hundred parts of adhesive composition or less, more preferably 70 parts of epoxy resin per hundred parts of adhesive composition or less, and most preferably 60 parts per hundred parts of adhesive composition or less.

Preferably the rubber-modified epoxy resins are used in an amount of 0 parts per hundred parts of adhesive composition or greater, and more preferably 5 parts per hundred parts of adhesive composition or greater, and most preferably 10 parts per hundred parts of adhesive composition or greater. The rubber-modified epoxy resin is used in 25 parts per hundred parts of adhesive composition or less, more preferably 20 parts per hundred parts of adhesive composition or less, and more preferably 15 parts per hundred of adhesive compositions or less. The curing agent is used in sufficient amount to cure the composition. Preferably, the curing agent is used in an amount of 0 parts per hundred parts of adhesive composition or greater, more preferably 3 parts per hundred parts of adhesive composition or greater, and most preferably 5 parts per hundred parts of adhesive composition or greater. The curing agent is preferably used in amount of 15 parts per hundred parts of adhesive composition or less, more preferably 10 parts per hundred parts of adhesive composition or less, and most preferably 8 parts per hundred parts of adhesive composition or less.

Fillers are used in sufficient amount to provide the desired rheological properties. Preferable fillers are used in an amount of 0 parts per hundred parts of adhesive composition or greater, more preferably 5 parts per hundred parts of adhesive composition or greater, and most preferably 10 parts per hundred parts of adhesive composition or greater. The fillers are present in an amount of 25 parts per hundred parts of adhesive composition or less, more preferably 20 parts per hundred parts of adhesive composition or less, and most preferably 15 parts per hundred parts of adhesive composition or less.

The toughening agent is present in sufficient amount to improve the performance of adhesive compositions containing it under dynamic load. Preferably, the toughening agents of the invention are present in an amount of 5 parts per hundred parts of adhesive composition or greater, preferably 7 parts per hundred parts of adhesive composition or greater and most preferably 10 parts per hundred parts of adhesive composition or greater. Preferably, the toughening agent is present in an amount of 35 parts per hundred parts of adhesive composition or less, preferably 25 parts per hundred parts of adhesive composition or less and more preferably 20 parts per hundred parts of adhesive composition or less.

The adhesive composition further comprises a catalyst for the cure of the reaction. Any suitable catalyst for an epoxy curing reaction may be used. Epoxy catalysts are present in sufficient amount to catalyze the curing reaction when exposed to temperatures at which the latent curing agent begins the cure. Among preferred epoxy catalysts are ureas such as p-chlorophenyl-N,N-dimethylurea (Monuron), 3-phenyl-1,1-dimethylurea (Phenuron), 3,4-dichlorophenyl-N,N-dimethylurea (Diuron), N-(3-chloro-4-methylphenyl)-N',N'-dimethylurea (Chlortoluron), tert-acryl- or alkylene amines like benzyldimethylamine, 2,4,6-tris(dimethylaminomethyl)phenol, piperidine or derivates thereof, imidazole derivates, in general C₁-C₁₂alkylene imidazole or N-arylimidazols, such as 2-ethyl-2-methylimidazol, or N-butylimidazol, 6-caprolactam, a preferred catalyst is 2,4,6-tris(dimethylaminomethyl)phenol integrated into a poly(p-vinylphenol) matrix (as described in European patent EP 0 197 892). Preferably, the catalyst is present in the adhesive composition in the amount of 0 parts per hundred parts of adhesive composition or greater, more preferably 0.3 parts per hundred parts of adhesive composition or greater, and most preferably 0.5 parts per hundred parts of adhesive composition or greater. Preferably, the epoxy curing catalyst is present in an amount of 2 parts per hundred parts of adhesive composition or less, more preferably 1.5 composition parts per hundred parts of adhesive or less, and most preferably 1.3 parts per hundred parts of adhesive composition or less.

Preferably, the adhesive composition has a viscosity of 150 Pa.s or less, more preferably 100 Pa.s or less at 45°C. Preferably, the compositions have a viscosity of 20 Pa.s. or greater at 45°C, and most preferably 30 Pa.s. or greater at 45°C.

The adhesive composition can be applied by any techniques well known in the art. It can be applied by extruding it from a robot into bead form on the substrate, it can be applied using mechanical application methods such as a caulking gun, or any other manual application means, it can also be applied using a swirl technique. The swirl technique is applied using an apparatus well known to one skilled in the art such as pumps, control systems, dosing gun assemblies, remote dosing devices and application guns. Preferably, the adhesive is applied to the substrate using a streaming process, What is meant by applying by a streaming process means spraying a bead at a distance, nozzle to substrate, of 3 to 10 mm, using pressures of 50 to 300 bar, speeds of 200 to 500 mm/s, application temperatures from 20°C to 65°C and nozzle diameter of 0.5 to 1.5 mm. Equipment known to those skilled in art can be used for applying the adhesive via a steaming process and include pumps, control systems, dosing gun assemblies, remote dosing devices and application guns. Generally, the adhesive is applied to one or both substrates. The substrates are contacted such that the adhesive is located between the substrates to be bonded together. Thereafter, the adhesive composition is subjected to heating to a temperature at which the heat curable or latent curing agent initiates cure of the epoxy resin composition. Generally, this temperature is 80°C or above, more preferably 100°C or above. Preferably, the temperature is 220°C or less, and more preferably 180°C or less.

The adhesive of the invention can be used to bond a variety of substrates together including wood, metal, coated metal, aluminum, a variety of plastic and filled plastic substrates, fiberglass and the like. In one preferred embodiment, the adhesive is used to bond parts of automobiles together or parts to automobiles. Such parts can be steel, coated steel, aluminum, coated aluminum, plastic and filled plastic substrates.

The adhesive composition once cured preferably has an e-modulus of 1200 MPa as measured according to the following tests. Preferably the e-modulus is 1400 MPa or greater. Preferably, the cured adhesive demonstrates a tensile strength of 30 MPa or greater, more preferably 35 MPa or greater, and most preferably 40 MPa or greater. Preferably, the adhesive demonstrates an elongation of 3 percent or greater, more preferably 5 percent or greater, and most preferably 9 percent or greater as measured according to DIN EN ISO 527-1. Preferably, the yield point at 45°C is 200 Pa. or greater, more preferably 250 Pa. or greater, and most preferably 300 Pa. or greater measured on a Bohlin viscosimeter and calculated after Casson. Preferably, the lap shear strength of a 1.5 mm thick cured adhesive layer is 15 MPa or greater, more preferably 20 MPa or greater, and most preferably 25 MPa or greater measured according to DIN EN 1465. Preferably, the impact peel strength at room temperature of the cured adhesive is 15 N/mm or greater, more preferably 20 N/mm or greater, and most preferably 30 N/mm or greater measured according to ISO 11343.

Molecular weights as quoted herein are weight average molecular weights measured according to GPC analysis using mixed polystyrene as colomn material, THF as diluent and linear polystyrene as standard at 45°C.

### Examples

The following examples are included for illustrative purposes only and are not intended to limit the scope of the claimed invention. Unless otherwise stated, all percentages and parts are on a weight basis.

### Preparation of Toughener A

A 6000 (Mw) molecular weight trifunctional polyether polyol (polypropylene oxide based) was poured into a vessel. 11.1 g of hexamethylene diisocyanate was added and the mixture was heated up to 60°C. Then 0.02 g dibutyltin-dilaurate was added. An exothermic reaction started, and the temperature increases up to 80-90°C. Stirring was continued until reaction was completed. After the mixture was cooled down to 60°C, 13.5 g 2-allylphenol was added. The solution was stirred at 80°C for 30 minutes.

### Preparation of Toughener B

66.6 g of Polytetrahydrofuran having a molecular weight of approximately 2000 (Mw) were preheated at 90°C. The resulting liquid was then poured into a vessel and 20.7 g of bisphenol A and 0.3 g of trimethylolpropane were added. The resulting suspension was heated up to 140°C and stirred until all bisphenol A was dissolved. After the mixture was cooled down to 60°C, 12.3 g hexamethylene diisocyanate were added. The mixture was stirred to homogeneity. Then 0.02 g dibutyltin-dilaurate was added. An exothermic reaction was starting, followed by an increase of temperature between 20 and 30°C up to 90°C. The solution was cooled and stirred for 1 hour to finish the reaction.

### Preparation of Toughener C

64.2 g of a 6000 (Mw) molecular weight trifunctional polyether polyol (polypropylene oxide based) was poured into a vessel. 9.5 g of hexamethylene diisocyanate is added, and the mixture was heated up to 60°C. Then 0.02 g dibutyltin-dilaurate was added. An exothermic reaction started, and the temperature increases up to 80-90°C. Stirring was continued until reaction is completed. The mixture was cooled down to 60°C and 26.3 g 3-(n-penta-8'-decenyl)phenol was added. The solution was stirred at 80°C for 30 minutes.

### Preparation of the Adhesive

12.5 elastomer modified bisphenol F based epoxy prepolymer, 53.6 g a diglycidyl ether of bisphenol A liquid epoxy resin having an epoxy equivalent weight of approx. 360 (Mw), 12.5 g toughener A, B, or C, were mixed in a laboratory planetary mixture at room temperature for 30 minutes. Then 1.2g Glycidyl ester of a saturated mono carboxylic acid, 0.7g glycidyl silyl ether were added and the mixture is stirred at room temperature for another 30 minutes. Then 9.9 g of surface modified fumed silica and 2.9 g polyvinyl butyral were added and stirred at room temperature for 15 minutes. At the end 5.7 g dicyanamide and 0.6 g of Tris(2,4,6-dimethylaminomethyl)phenol in a polymeric matrix were added, and the mixture is stirred for 10 minutes at room temperature. All mixing steps were performed under vacuum.

The adhesive compositions prepared were tested for a variety of properties. Those tests were: lap shear strength (1.5 mm CRS 14O3, oil 5103S) according DIN EN 1465, impact peel strength (1.0 mm CRS 1403, oil 5103S) according ISO 11343, Young modulus, elongation and shear strength according DIN EN ISO 527-1.

The results of the testing on the inventive products and comparative products are included in the following table.

| Toughener | Standard Toughener¹ | Toughener A | Toughener B | Toughener C (acc. to the invention |
|---|---|---|---|---|
| Mw | 72200 | 51000 | 49900 | 34500 |
| Mn | 32400 | 24300 | 25600 | 31200 |
| polydispersity | 2.2 | 2.1 | 1.9 | 1.1 |
| Viscosity at 40°C [Pas] | 900 | 60 | 610 | 9 |
| Viscosity at 60°C [Pas] | 240 | 20 | 180 | 3 |
| Viscosity at 80°C [Pas] | 80 | 10 | 60 | 1 |

| Formulation with: | Standard Toughener | Toughener A | Toughener B | Toughener C |
|---|---|---|---|---|
| Lap Shear strength [MPa] | 28 | 28 | 26 | 27 |
| Impact Peel Strength [N/mm] | 41 | 29 | 39 | 30 |
| Young Modulus [MPa] | 1600 | 2100 | 2200 | 2100 |
| Tensile strength [MPa] | 32 | 47 | 51 | 47 |
| Elongation [%] | approx. 10 | 9 | 9 | 6 |
| Viscosity [Pas] | 200 | | 30 | 20 |
| Yield Stress [Pa] | 80 | | 480 | 460 |

| | | | | |
|---|---|---|---|---|
| ¹ Refers to an adhesive as prepared using RAM 965 toughener available from Vantico made according to Example 16 of Mülhaupt U.S. Patent 5,278,257. | | | | |

Adhesives using tougheners B and C of the invention were tested for streaming on an Intec machine at the following speeds: 150-400 mm per second using a temperature at the nozzle of 40-65°C and a pressure of from 50 to 200 bar. The thread behavior and squeezability were judged to be excellent. The adhesives were applied in a bead of 15 mm x 0.4 mm size to a metal substrate.

## Claims

1. A method of applying a stream of an adhesive composition to a substrate, the method comprising spraying a bead at a distance from a nozzle to the substrate of 3 to 10 mm, using a pressure of 50 to 300 bar, a speed of 200 to 500 mm/s, an application temperature of from 20 to 65°C and a nozzle diameter of 0.5 to 1.5 mm, the adhesive composition comprising:
A. one or more epoxy resins;
B. one or more rubber modified epoxy resins;
C. one or more toughening compositions comprising the reaction product of one or more isocyanate terminated prepolymers and one or more capping compounds having one or more bisphenolic, phenolic, benzyl alcohol, aminophenyl or, benzylamino moieties wherein the reaction product is terminated with the capping compound, wherein the capping compound is a phenolic compound which contains one aromatic moiety and one aliphatic substituent on the aromatic ring which does not interfere in the reaction of the hydroxyl group with an isocyanate group and wherein the capping compound and the prepolymer are contacted in a reaction mixture cooled to a temperature of 90°C or less and for a time of 120 minutes or less;
D. one or more curing agents and one or more catalysts for epoxy resins which initiates cure at a temperature of about 100°C or greater; and
E. optionally; fillers, adhesion promoters, wetting agents and rheological additives useful in epoxy adhesive compositions.

2. The method according to Claim 1 wherein the isocyanate terminated prepolymer corresponds to one of the formulas 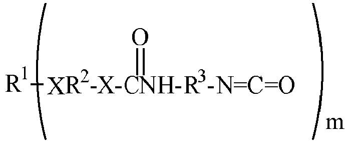 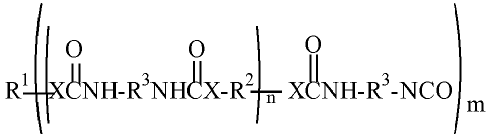 and the capping compound corresponds to the formula 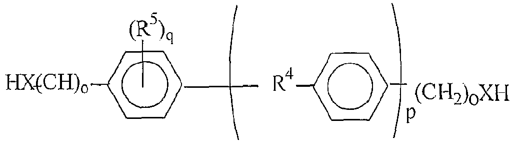 wherein
R¹ is independently in each occurrence a C₂₋₂₀ m-valent alkyl moiety;
R² is independently in each occurrence a polyether chain;
R³ is independently in each occurrence an alkylene, cycloalkylene or mixed alkylene and cycloalkylene moiety;
R⁴ is a direct bond or an alkylene, carbonyl, oxygen, carboxyloxy or amido moiety;
R⁵ is independently in each occurrence an alkyl, alkenyl, alkyloxy or aryloxy moiety with the proviso that if p=1 then q=0;
X is O or -NR⁶ with the proviso that X is O where p is 1; and that where p is 0, X is O in at least one occurrence;
R⁶ is independently in each occurrence hydrogen or alkyl;
m is independently in each occurrence a number of 1 to 6 ;
n is independently in each occurrence a number of 1 or greater;
o is independently in each occurrence 0 or 1 if p is 0, and 0 if p is 1;
p is independently in each occurrence 0 or 1;
q is independently in each occurrence a number of from 0 to 1.

3. A method according to Claim 2 wherein the toughening composition corresponds to one of the formulas 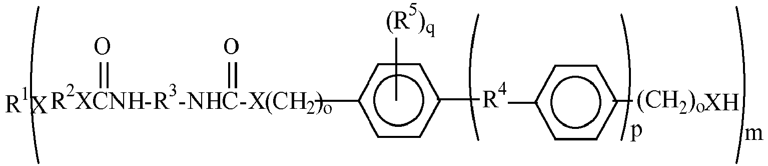 or 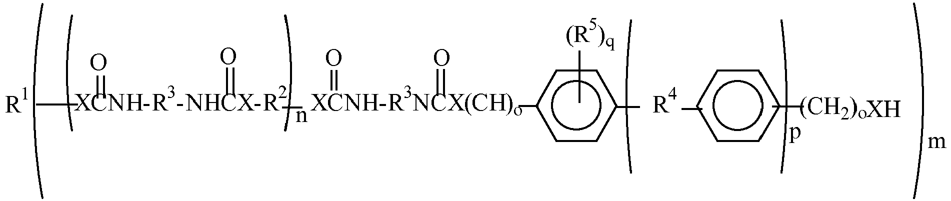 wherein
R¹ is independently in each occurrence a C₂₋₂₀ m valent alkyl moiety;
R² is independently in each occurrence a polyether chain;
R³ is independently in each occurrence an alkylene, cycloalkylene or mixed alkylene and cycloalkylene moiety, optionally containing one or more oxygen or sulfur atoms;
R⁴ is a direct bond or an alkylene, carbonyl, oxygen, carboxyloxy, or amido moiety;
R⁵ is independently in each occurrence an alkyl, alkenyl, alkyloxy or aryloxy moiety with the proviso that if p=1 then q=0;
X is O or -NR⁶ with the proviso that X is O where p is 1; that where p is 0, X is O in at least one occurrence;
R⁶ is independently in each occurrence hydrogen or alkyl;
m is independently in each occurrence a number of about 1 to about 6 ;
n is independently in each occurrence a number of 1 or greater;
o is independently in each occurrence 0 or 1 if p is 0, and 0 if p is 1;
p is independently in each occurrence 0 or 1; and
q is independently in each occurrence a number of from 0 to 1.

4. A method according to Claim 3 wherein
R¹ is independently in each occurrence a 2 to 3 valent C₂₋₈ alkyl moiety;
R² is a polyalkylene polyether chain having a weight average molecular weight of about 400 to about 4000;
R³ is independently in each occurrence a C₂₋₂₀ alkylene, cycloalkylene or mixed alkylene and cycloalkylene moiety;
R⁴ is a C₁₋₂₀ straight or branched chain alkylene moiety;
R⁵ is independently in each occurrence C₁₋₂₀ alkyl, C₂₋₂₀ alkenyl, C₁₋₂₀ alkoxy or C-₆₋₂₀ aryloxy moiety with the proviso that where p is 0, R⁵ is a C₁₋₂₀ alkyl moiety;
R⁶ is independently in each occurrence hydrogen or C₁₋₄ alkyl moiety;
m is independently in each occurrence about 2 to about 4 ;
n is independently in each occurrence about 1 to about 3;
p is independently in each occurrence a number of 0 or 1 and
q is 0 or 1.

5. A method of bonding two or more substrates together which comprises applying to one or more substrates an adhesive according to the method of Claim 1;
contacting the substrates with the adhesive located between the one or more substrates and
heating the adhesive to a temperature at which the adhesive composition cures.

## Patentansprüche

1. Verfahren zum Auftragen eines Stroms einer Klebstoffzusammensetzung auf ein Substrat, wobei das Verfahren das Aufspritzen einer Kleberaupe bei einer Entfernung von einer Düse bis zu dem Substrat von 3 bis 10 mm unter Anwendung eines Druckes von 50 bis 300 Bar, einer Geschwindigkeit von 200 bis 500 mm/s, einer Auftragstemperatur von 20° bis 65 °C und einem Düsendurchmesser von 0,5 bis 1,5 mm umfasst, wobei die Klebstoffzusammensetzung umfasst:
A. ein oder mehrere Epoxidharze;
B. ein oder mehrere gummimodifizierte Epoxidharze;
C. eine oder mehrere schlagzähmachende Zusammensetzungen, die das Reaktionsprodukt von einem oder mehreren mit Isocyanat terminierten Prepolymeren und eine oder mehrere kappende Verbindungen die eine oder mehrere Bisphenol-, Phenol-, Benzylalkohol-, Aminophenyl- oder Benzylamino-Reste aufweisen, umfassen, wobei das Reaktionsprodukt mit der kappenden Verbindung terminiert ist, wobei die kappende Verbindung eine Phenolverbindung ist, die einen aromatischen Rest und einen aliphatischen Substituenten an dem aromatischen Ring enthält, der die Reaktion der Hydroxyl-Gruppe mit einer Isocyanat-Gruppe nicht stört, und wobei die kappende Verbindung und das Prepolymer in einem Reaktionsgemisch in Kontakt gebracht werden, das auf eine Temperatur von 90 °C oder weniger und für eine Dauer von 120 Minuten oder weniger gekühlt ist;
D. ein oder mehrere Mittel zum Härten und ein oder mehrere Katalysatoren für Epoxidharze, die die Härtung bei einer Temperatur von etwa 100 °C oder mehr einleiten; und
E. optional; Füllstoffe, Haftvermittler, Benetzungsmittel und rheologische Zusatzstoffe, die in Epoxid-Klebstoffzusammensetzungen nützlich sind.

2. Zusammensetzung nach Anspruch 1, wobei das mit Isocyanat terminierte Prepolymer einer der folgenden Formeln entspricht: 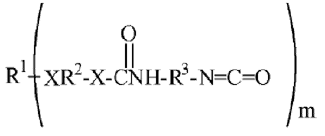 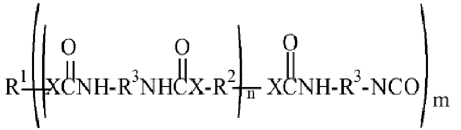 und die kappende Verbindung der folgenden Formel entspricht: 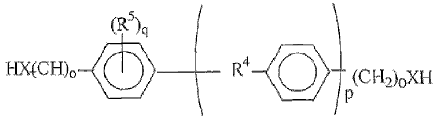 worin
R¹ unabhängig beim jeweiligen Auftreten ein C₂₋₂₀ m-wertiger Alkyl-Rest ist;
R² unabhängig beim jeweiligen Auftreten eine Polyether-Kette ist;
R³ unabhängig beim jeweiligen Auftreten ein Alkylen-, Cycloalkylen- oder gemischter Alkylen- und Cycloalkylen-Rest ist;
R⁴ eine direkte Bindung oder ein Alkylen-, Carbonyl-, Sauerstoff-, Carboxyloxy- oder Amido-Rest ist;
R⁵ unabhängig beim jeweiligen Auftreten ein Alkyl-, Alkenyl-, Alkyloxy- oder Aryloxy-Rest ist mit der Maßgabe, dass, wenn p=1 ist, dann q=0 ist;
X O oder -NR⁶ ist mit der Maßgabe, dass X O ist, wo p 1 ist; und dass, wo p 0 ist, X bei mindestens einem Auftreten O ist;
R⁶ unabhängig beim jeweiligen Auftreten Wasserstoff oder Alkyl ist;
m unabhängig beim jeweiligen Auftreten eine Zahl von 1 bis 6 ist;
n unabhängig beim jeweiligen Auftreten eine Zahl von 1 oder größer ist;
o unabhängig beim jeweiligen Auftreten 0 oder 1 ist, wenn p 0 ist und 0 ist, wenn p 1 ist;
p unabhängig beim jeweiligen Auftreten 0 oder 1 ist;
q unabhängig beim jeweiligen Auftreten eine Zahl von 0 bis 1 ist.

3. Verfahren nach Anspruch 2, wobei die schlagzähmachende Zusammensetzung einer der folgenden Formeln entspricht: 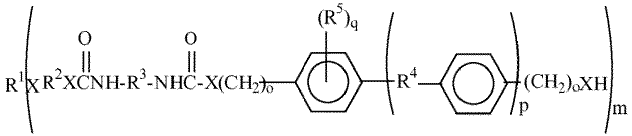 oder 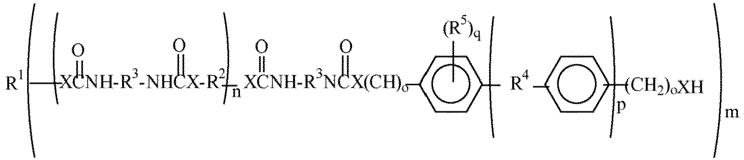 worin
R¹ unabhängig beim jeweiligen Auftreten ein C₂₋₂₀ m-wertiger Alkyl-Rest ist;
R² unabhängig beim jeweiligen Auftreten eine Polyether-Kette ist;
R³ unabhängig beim jeweiligen Auftreten ein Alkylen-, Cycloalkylen- oder gemischter Alkylen- und Cycloalkylen-Rest ist, der optional ein oder mehrere Sauerstoff- oder Schwefelatome enthält;
R⁴ eine direkte Bindung oder ein Alkylen-, Carbonyl-, Sauerstoff-, Carboxyloxy- oder Amido-Rest ist;
R⁵ unabhängig beim jeweiligen Auftreten ein Alkyl-, Alkenyl-, Alkyloxy- oder Aryloxy-Rest ist, mit der Maßgabe, dass, wenn p = 1 ist, dann q = 0 ist;
X O oder -NR⁶ ist, mit der Maßgabe, dass X O ist, wo p 1 ist; dass, wo p 0 ist, X bei mindestens einem Auftreten O ist;
R⁶ unabhängig beim jeweiligen Auftreten Wasserstoff oder Alkyl ist;
m unabhängig beim jeweiligen Auftreten eine Zahl von etwa 1 bis etwa 6 ist;
n unabhängig beim jeweiligen Auftreten eine Zahl von 1 oder größer ist;
o unabhängig beim jeweiligen Auftreten 0 oder 1 ist, wenn p 0 ist, und 0, wenn p 1 ist;
p unabhängig beim jeweiligen Auftreten 0 oder 1 ist; und
q unabhängig beim jeweiligen Auftreten eine Zahl von 0 bis 1 ist.

4. Verfahren nach Anspruch 3, wobei
R¹ unabhängig beim jeweiligen Auftreten ein 2- bis 3-wertiger C₂₋₈-Alkyl-Rest ist;
R² eine Polyalkylen-Polyether-Kette ist, die ein Gewichtsmittel des Molekulargewichts von etwa 400 bis etwa 4.000 aufweist;
R³ unabhängig beim jeweiligen Auftreten ein C₂₋₂₀-Alkylen-, Cycloalkylen- oder gemischter Alkylen- und Cycloalkylen-Rest ist;
R⁴ ein gerad- oder verzweigtkettiger C₁₋₂₀-Alkylen-Rest ist;
R⁵ unabhängig beim jeweiligen Auftreten ein C₁₋₂₀-Alkyl-, C₂₋₂₀-Alkenyl-, C₁₋₂₀-Alkoxy- oder C₆₋₂₀-Aryloxy-Rest ist, mit der Maßgabe, dass, wo p 0 ist, R⁵ ein C₁₋₂₀- Alkyl-Rest ist;
R⁶ unabhängig beim jeweiligen Auftreten Wasserstoff oder ein C₁₋₄-Alkyl-Rest ist;
m unabhängig beim jeweiligen Auftreten etwa 2 bis etwa 4 ist;
n unabhängig beim jeweiligen Auftreten etwa 1 bis etwa 3 ist;
p unabhängig beim jeweiligen Auftreten eine Zahl von 0 oder 1 ist; und
q 0 oder 1 ist.

5. Verfahren zum miteinander Verkleben von zwei oder mehreren Substraten, das das Auftragen von Klebstoff auf ein oder mehrere Substrate nach dem Verfahren nach Anspruch 1;
das In-Kontakt-Bringen der Substrate mit dem Klebstoff, der sich zwischen dem einen oder mehreren Substraten befindet; und
das Erwärmen des Klebstoffs bis zu einer Temperatur bei der die Klebstoffzusammensetzung härtet, umfasst.

## Revendications

1. Procédé pour l'application d'un courant d'une composition adhésive sur un substrat, le procédé comprenant la pulvérisation d'un bourrelet à une distance à partir d'une buse vers le substrat de 3 à 10 mm, en utilisant une pression de 50 à 300 bars, une vitesse de 200 à 500 mm/s, une température d'application de 20 à 65°C et un diamètre de buse de 0,5 à 1,5 mm, la composition adhésive comprenant:
A. une ou plusieurs résines époxy;
B. une ou plusieurs résines époxy modifiées par un caoutchouc;
C. une ou plusieurs compositions de renforcement comprenant le produit de réaction d'un ou de plusieurs prépolymères terminés par un isocyanate et un ou plusieurs composés de coiffe possédant une ou plusieurs fractions bisphénoliques, phénoliques, d'alcool benzylique, d'aminophényle ou de benzylamino où le produit de réaction est terminé avec le composé de coiffe, où le composé de coiffe est un composé phénolique qui contient une fraction aromatique et un substituant aliphatique sur le cycle aromatique qui n'interfère pas dans la réaction du groupe hydroxyle avec un groupe isocyanate et où le composé de coiffe et le prépolymère sont mis en contact dans un mélange de réaction refroidi à une température de 90°C ou moins et pendant un temps de 120 minutes ou moins;
D. un ou plusieurs agents de durcissement et un ou plusieurs catalyseurs pour des résines époxy qui initient le durcissement à une température d'environ 100°C ou plus; et
E. optionnellement; des charges, des promoteurs d'adhésion, des agents mouillants et des additifs rhéologiques utiles dans des compositions adhésives époxy.

2. Procédé selon la revendication 1, dans lequel le prépolymère terminé par un isocyanate correspond à une des formules: 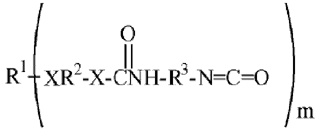 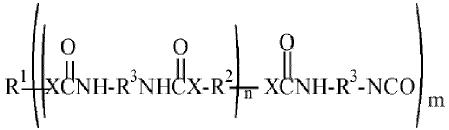 et le composé de coiffe correspond à la formule: 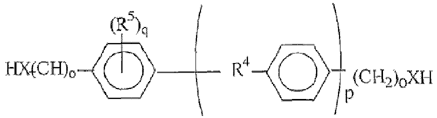 dans lesquelles:
R¹ est indépendamment à chaque occurrence une fraction C₂₋₂₀ alkyle à valence m;
R² est indépendamment à chaque occurrence une chaîne de polyéther;
R³ est indépendamment à chaque occurrence une fraction alkylène, cycloalkylène ou alkylène et cycloalkylène mixte;
R⁴ est une liaison directe ou une fraction alkylène, carbonyle, oxygène, carboxyloxy ou amido;
R⁵ est indépendamment à chaque occurrence une fraction alkyle, alcényle, alkyloxy ou aryloxy sous réserve que si p = 1 alors q = 0;
X est O ou -NR⁶ sous réserve que X soit O lorsque p est 1; et que lorsque p est 0, X soit O à au moins une occurrence;
R⁶ est indépendamment à chaque occurrence un hydrogène ou un alkyle;
m est indépendamment à chaque occurrence un nombre de 1 à 6;
n est indépendamment à chaque occurrence un nombre de 1 ou plus;
o est indépendamment à chaque occurrence 0 ou 1 si p est 0, et 0 si p est 1;
p est indépendamment à chaque occurrence 0 ou 1;
q est indépendamment à chaque occurrence un nombre de 0 à 1.

3. Procédé selon la revendication 2, dans lequel la composition de renforcement correspond à une des formules: 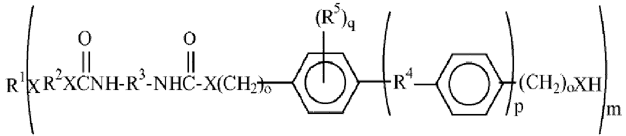 ou 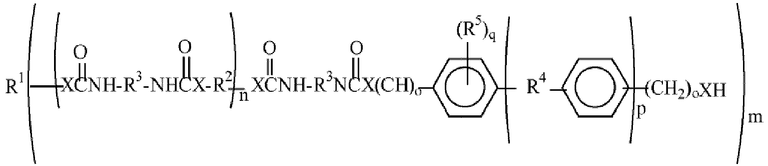 dans lesquelles:
R¹ est indépendamment à chaque occurrence une fraction C₂₋₂₀ alkyle à valence m;
R² est indépendamment à chaque occurrence une chaîne de polyéther;
R³ est indépendamment à chaque occurrence une fraction alkylène, cycloalkylène ou alkylène et cycloalkylène mixte, contenant optionnellement un ou plusieurs atomes d'oxygène ou de soufre;
R⁴ est une liaison directe ou une fraction alkylène, carbonyle, oxygène, carboxyloxy ou amido;
R⁵ est indépendamment à chaque occurrence une fraction alkyle, alcényle, alkyloxy ou aryloxy sous réserve que si p = 1 alors q = 0;
X est O ou -NR⁶ sous réserve que X soit O lorsque p est 1; que lorsque p est 0, X soit O à au moins une occurrence;
R⁶ est indépendamment à chaque occurrence un hydrogène ou un alkyle;
m est indépendamment à chaque occurrence un nombre d'environ 1 à environ 6;
n est indépendamment à chaque occurrence un nombre de 1 ou plus;
o est indépendamment à chaque occurrence 0 ou 1 si p est 0, et 0 si p est 1;
p est indépendamment à chaque occurrence 0 ou 1; et
q est indépendamment à chaque occurrence un nombre de 0 à 1.

4. Procédé selon la revendication 3, dans lequel:
R¹ est indépendamment à chaque occurrence une fraction C₂₋₈ alkyle à valence 2 à 3;
R² est une chaîne de polyalkylène polyéther possédant un poids moléculaire moyen en poids d'environ 400 à environ 4000;
R³ est indépendamment à chaque occurrence une fraction C₂₋₂₀ alkylène, cycloalkylène ou alkylène et cycloalkylène mixte;
R⁴ est une fraction C₁₋₂₀ alkylène à chaîne droite ou ramifiée;
R⁵ est indépendamment à chaque occurrence une fraction C₁₋₂₀ alkyle, C₂₋₂₀ alcényle, C₁₋₂₀ alcoxy ou C₆₋₂₀ aryloxy sous réserve que lorsque p est 0, R⁵ soit une fraction C₁₋₂₀ alkyle;
R⁶ est indépendamment à chaque occurrence un hydrogène ou une fraction C₁₋₄ alkyle;
m est indépendamment à chaque occurrence environ 2 à environ 4;
n est indépendamment à chaque occurrence environ 1 à environ 3;
p est indépendamment à chaque occurrence un nombre de 0 ou 1; et
q est 0 ou 1.

5. Procédé pour le collage ensemble de deux substrats ou plus qui comprend l'application sur un ou plusieurs substrats d'une composition adhésive selon le procédé de la revendication 1;
la mise en contact des substrats avec l'adhésif localisé entre les un ou plusieurs substrats; et
le chauffage de l'adhésif à une température à laquelle la composition adhésive durcit.
